# EUROPÄISCHE PATENTSCHRIFT

(11) **EP 1 544 059 B1**
(45) Veröffentlichungstag und Bekanntmachung des Hinweises auf die Patenterteilung: **15.04.2009**
(21) Anmeldenummer: 04024452.7
(22) Anmeldetag: 14.10.2004
(51) Int. Cl.: B60R 21/20

(54) **Instrumententafel mit einem Beifahrerairbag**
Dashboard with passenger airbag
Tableau de bord avec airbag pour passager

(30) Priorität: 19.12.2003 DE 10359751
(43) Veröffentlichungstag der Anmeldung: 22.06.2005
(73) Patentinhaber: Dr. Ing. h.c. F. Porsche Aktiengesellschaft, 70435 Stuttgart (DE)
(72) Erfinder: Gayer, Bernd, 71287 Weissach (DE); Frank, Martin, 75417 Muehlacker (DE); Brüning, Thomas, 71282 Hemmingen (DE)

(56) Entgegenhaltungen:
- DE-A1- 4 233 752
- US-A- 5 350 191
- US-A- 5 549 324
- US-A- 5 816 609
- US-A1- 2002 027 337
- PATENT ABSTRACTS OF JAPAN Bd. 1995, Nr. 06, 31. Juli 1995 (1995-07-31) -& JP 07 061310 A (TOYODA GOSEI CO LTD), 7. März 1995 (1995-03-07)

## Beschreibung

Die Erfindung betrifft eine Instrumententafel mit einem Beifahrerairbag, wobei bei einer Airbagauslösung eine an einer Oberseite der Instrumententafel benachbart einer Windschutzscheibe verlaufende Airbagabdeckung um eine quer verlaufende Schwenkachse nach oben hin in Richtung Windschutzscheibe verlagerbar ist und eine Durchtrittsöffnung für einen Gassack des Beifahrerairbags freigibt.

Insbesondere, wenn die Airbagabdeckung an der Oberseite der Instrumententafel, also benachbart der Windschutzscheibe, vorgesehen ist, und die Airbagabdeckung einteilig ausgebildet ist, besteht die Gefahr, dass bei einer Airbagauslösung beim Hochschwenken der Airbagabdeckung das freie Ende der Airbagabdeckung die Windschutzscheibe beschädigt. Der Austausch einer beschädigten Windschutzscheibe benötigt viel Zeit und ist relativ kostenintensiv.

US 5 350 191 A beschreibt eine Beifahrer-Airbag-Abdeckung gemäß der Oberbegriff des Patentanspruchs 1.

Aufgabe der Erfindung ist es, an einer Airbagabdeckung solche Vorkehrungen zu treffen, dass das Beschädigen der Windschutzscheibe bei einer Airbagauslösung zuverlässig verhindert wird.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass durch die Anordnung einer quer verlaufenden Sollknickstelle an der Airbagabdeckung beim Auslösen des Airbags die Airbagabdeckung definiert nach oben hin abknickt, sobald ihr freies Ende mit der Windschutzscheibe in Kontakt gelangt. Durch das Abknicken wird die Windschutzscheibe nicht beschädigt und braucht deshalb nicht erneuert zu werden. Die Sollknickstelle wird durch eine nach außen bzw. oben gerichtete Sicke eines innen liegenden Blechteils und eine korrespondierende Schwächung des vorgelagerten Trägerteils gebildet.
Ein Ausführungsbeispiel der Erfindung ist in der Zeichnung näher erläutert.

Es zeigt:

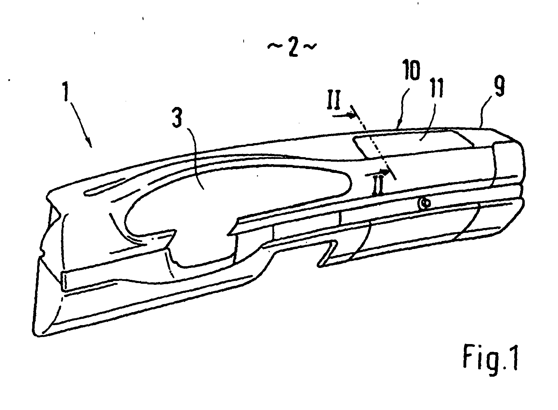

- Fig. 1: Eine perspektivische Ansicht von schräg vorne auf eine Instrumententafel mit einem Beifahrerairbag,
- Fig. 2: einen Schnitt nach der Linie II-II der Fig. 1 in größerer Darstellung in Einbaustellung A der Airbagabdeckung,
- Fig. 3: einen Schnitt ähnlich Fig. 2 mit der Airbagabdeckung nach einer erfolgten Airbagauslösung (ab Knickstellung B),
- Fig. 4: eine Einzelheit der Fig. 2 in größerer Darstellung und
- Fig. 5: eine Ansicht von innen auf das innere Blechteil der Airbagabdeckung.

Eine Instrumententafel 1 für einen Personenkraftwagen ist unterhalb einer Windschutzscheibe 2 in einem Fahrgastraum angeordnet und erstreckt sich über die gesamte Breite des Fahrgastraumes. Auf der Fahrerseite ist eine Öffnung 3 erkennbar, die bei vollständig montierter Instrumententafel 1 die nicht näher dargestellten Instrumente aufnimmt.

Auf der Beifahrerseite weist die Instrumententafel 1 zum Schutz eines Beifahrers bei einem Zusammenstoß oder Unfall des Personenkraftwagens einen Beifahrerairbag 4 auf, der ein vorgefertigtes, an einem quer verlaufenden Tragrohr der Instrumententafel 1 befestigtes Airbagmodul 5 umfasst. Das Airbagmodul 5 besteht im wesentlichen aus einem Gehäuse 6, einem im Gehäuse 6 zusammengefalteten Gassack 7 und einem Gasgenerator 8 zum Aufblasen des Gassackes 7. An einer Oberseite 9 der Instrumententafel 1 ist benachbart der Windschutzscheibe 2 eine etwa rechteckige Durchtrittsöffnung 10 vorgesehen, die von einer abklappbaren Airbagabdeckung 11 verschlossen ist.

Bei einer Airbagauslösung wird die Airbagabdeckung 11 um eine - in Fahrtrichtung F gesehen - vordere, quer verlaufende etwa horizontal ausgerichtete Schwenkachse 12 nach oben hin in Richtung Windschutzscheibe 2 geschwenkt und bewegt sich mit ihrem freien Ende 30 zur Windschutzscheibe 2 hin.

Die Airbagabdeckung 11 weist in ihrer Einbaustellung A - in Fahrzeuglängs- und Fahrzeugquerrichtung gesehen - jeweils einen leicht nach außen gebogenen Formverlauf (ohne Knick) auf und ist einteilig ausgebildet. Die Airbagabdeckung 11 kann durch einen separaten Deckel gebildet werden, der über Scharniere oder dgl. mit der angrenzenden Instrumententafel 1 verbunden ist (nicht näher dargestellt).

Im Ausführungsbeispiel ist die Airbagabdeckung 11 integral mit der Instrumententafel 1 ausgebildet, d. h., vom Fahrgastraum aus ist keine sichtbare Fuge zwischen der Instrumententafel 1 und der Airbagabdeckung 11 vorhanden. Sowohl die Airbagabdeckung 11 als auch die Instrumententafel 1 weisen einen mehrlagigen gleichartigen Aufbau auf. Im Ausführungsbeispiel setzen sich die Bauteile 1, 11 aus einem innen liegenden formstabilen Trägerteil 13, einer darüber liegenden Kunststoffschaumschicht 14 und einer auf der Seite des Fahrgastraumes vorgesehenen Dekorschicht 15 zusammen. Die Kunststoffschaumschicht 14 wird vorzugsweise durch eine PUR-Schaumschicht gebildet. Im Ausführungsbeispiel ist als Dekorschicht 14 eine Slushhaut vorgesehen. Die Dekorschicht 14 kann jedoch auch durch eine Folie, durch Kunstleder, Leder oder dgl. gebildet werden.

Die Durchtrittsöffnung 10 an der Instrumententafel 1 wird dadurch gebildet, dass von der Rückseite der Instrumententafel 1 her durch Fräsen, Läsern oder dgl. eine umlaufende Sollbruchstelle geschaffen wird, die quasi eine Reißnaht für die Airbagabdeckung 11 beim Entfalten des Gassackes 7 bildet. Die Airbagabdeckung 11 ist also umfangseitig nur durch mehrere örtliche Stege mit der angrenzenden Instrumententafel 1 verbunden. Die Schwächung erfolgt im Bereich des Trägerteils 13, und in einem Teilbereich der Höhenerstreckung der Kunststoffschaumschicht 14. Ferner kann auch die Dekorschicht 15 an ihrer dem Fahrgastraum 29 abgekehrten Seite durch geeignete Maßnahmen geschwächt sein.

Außerhalb der rechteckförmigen Durchtrittsöffnung 10 ist am instrumententafelseitigen Bereich des Trägerteils 13 ein umlaufender profilierter Verstärkungsrahmen 16 mit örtlich vorstehenden Zapfen 17 vorgesehen, an denen ein etwa rechteckförmiger Schusskanal 18 zur Führung des Gassackes 7 beim Auslösen des Beifahrerairbags 4 befestigbar ist.

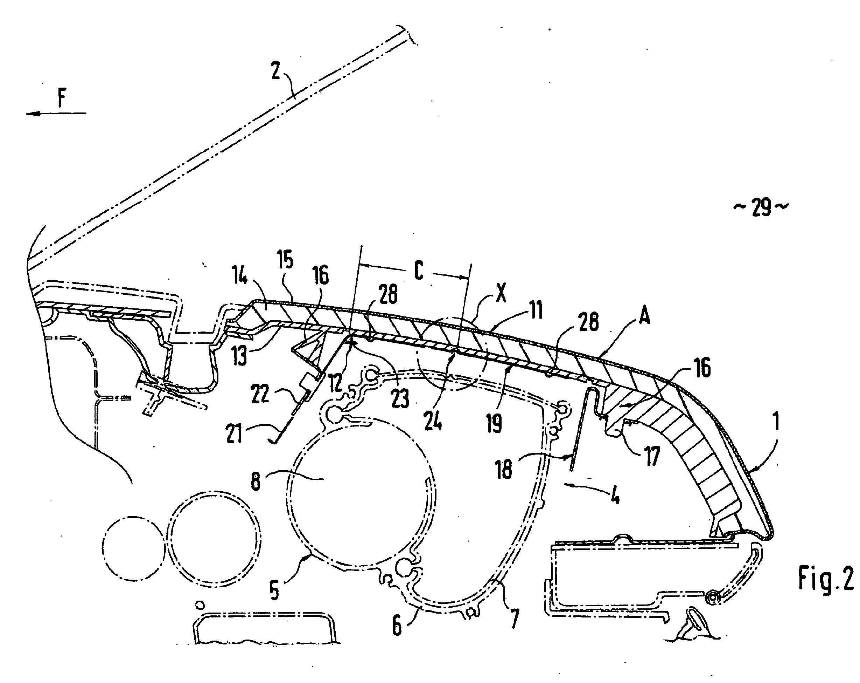

Gemäß Fig. 2 ist an der Innenseite der Airbagabdeckung 11 ein dünnwandiges Blechteil 19 angeordnet, das örtlich durch mehrere Niete 20 mit dem angrenzenden Trägerteil 13 verbunden ist. Ein abgewinkelter schräg nach unten verlaufender vorderer Randbereich 21 des Blechteils 19 ist mit einem gleichgericheteten Wandabschnitt 22 des Schusskanals 18 durch Schrauben, Niete oder dgl. verbunden. Der Mittelpunkt 23 eines etwa radienförmigen Übergangsbereichs zwischen dem vorderen Randbereich 21 und dem anschließenden, etwa parallel zur Airbagabdeckung 11 verlaufenden Teilbereich des Blechteils 19 bildet die quer verlaufende Schwenkachse 12 der Airbagabdeckung 11.

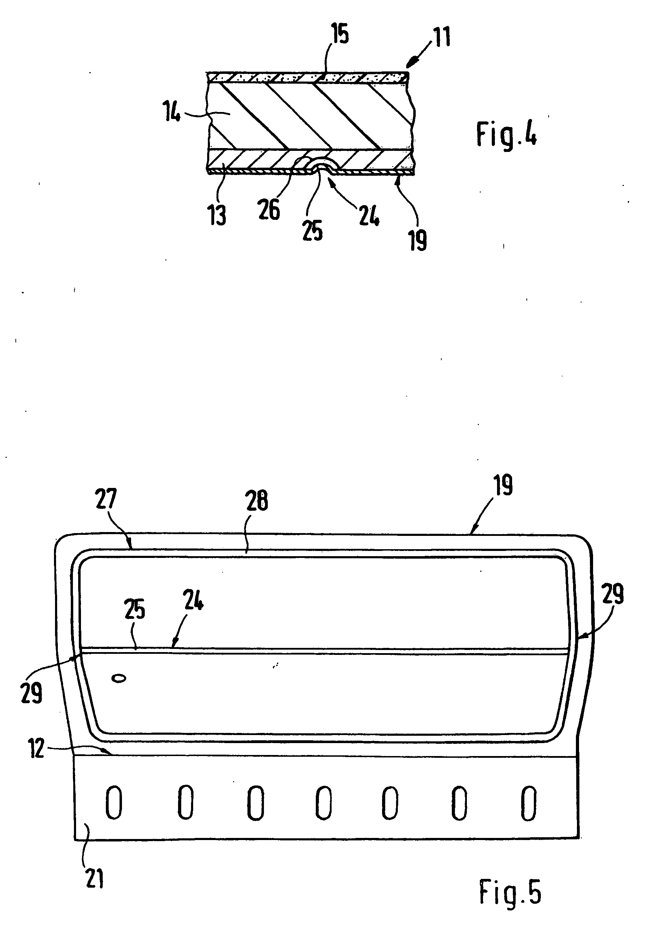

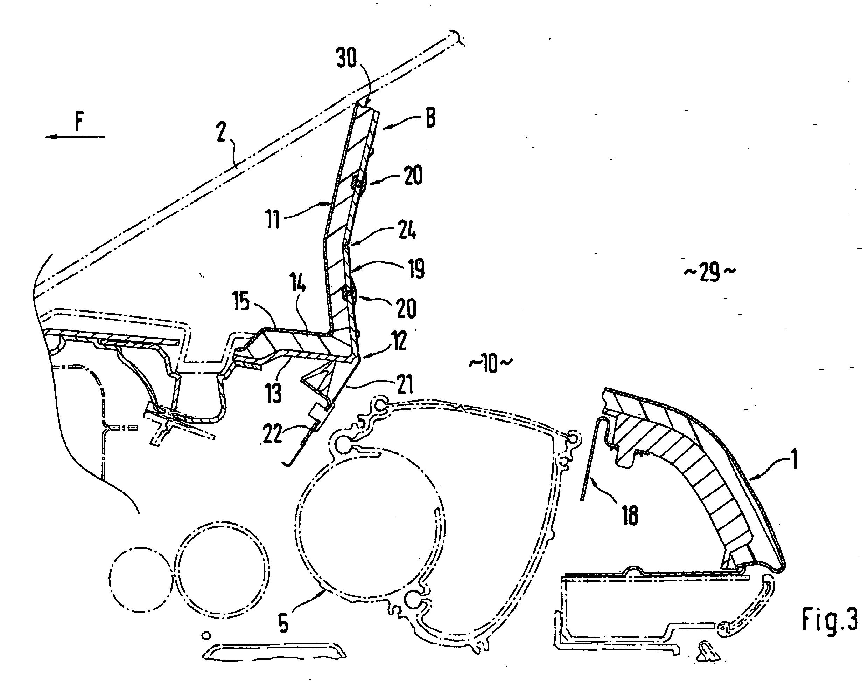

Damit die Airbagabdeckung 11 bei einer Airbagauslösung nicht die Windschutzscheibe 2 beschädigt, ist erfindungsgemäß vorgesehen, dass an der Airbagabdeckung 11 - in Fahrzeuglängsrichtung gesehen - beabstandet zur Schwenkachse 12 zumindest eine quer verlaufende Sollknickstelle 24 vorgesehen ist, um die die Airbagabdeckung 11 bei Kontakt mit der Windschutzscheibe 2 nach oben hin in eine Abknickstellung B abknickt (Fig. 3). Die Sollknickstelle 24 wird durch eine nach außen bzw. oben gerichtete Sicke 25 des Blechteils 19 und eine korrespondierende Schwächung 26 des angrenzenden vorgelagerten Trägerteils 13 gebildet. Die Sicke 25 und die Schwächung 26 sind im Querschnitt halbkreisförmig, V-förmig, U-förmig oder dgl. ausgebildet. Die Schwächung 26 am Trägerteil 13 verläuft mit geringerem Abstand zur vorgelagerten Sicke 25 des Blechteils 19 (siehe Fig. 4).

Das dünnwandige Blechteil 19 erstreckt sich nahezu über den gesamten Flächenbereich der verschwenkbaren Airbagabdeckung 11. An einem äußeren Rand 27 des Blechteils 19 ist eine umlaufende rahmenförmige nach innen gerichtete Versteifungssicke 28 vorgesehen. Die quer verlaufende, nach außen gerichtete Sicke 25 erstreckt sich über einen wesentlichen Teil der Breite der Airbagabdeckung 11 und ragt seitlich etwa bis an die beiden seitlichen Abschnitte 29 der rahmenförmigen Versteifungssicke 28 heran (Fig. 5). Die Sollknickstelle 24 ist etwa in einem mittleren Bereich der Längserstreckung der Airbagabdeckung 11 vorgesehen und weist zur Schwenkachse 12 einen Abstand C auf (Fig. 2).

## Patentansprüche

1. Instrumententafel (1) mit einem Beifahrer-Airbag (4), wobei bei einer Airbag-Auslösung eine an einer Oberseite der Instrumententafel (1) benachbart an der Windschutzscheibe (2) verlaufende Airbag-Abdeckung (11) um eine quer verlaufende Schwenkachse (12) nach oben hin in Richtung Windschutzscheibe (2) verlagerbar ist und eine Durchtrittsöffnung (10) für einen Gassack (7) des Beifahrerairbags freigibt, wobei die Airbag-Abdeckung (11) integral mit der Instrumententafel ausgebildet ist und die Instrumententafel (1) und die Airbag-Abdeckung (11) aus einem innen liegenden starren Trägerteil (13), eine darüber liegenden Kunststoffschaumschicht (14) und einer auf der Seite des Fahrgastraumes vorgesehene Dekorschicht (15) besteht, **dadurch gekennzeichnet, dass** die integrale Airbag-Abdeckung (11) an ihrer Innenseite auf dem Trägerteil (13) mit einem dünnwandigen Blechteil (19) verbunden ist, in dem beabstandet zur Schwenkachse (12) eine durchgehend quer verlaufende Sollknickstelle (24) vorgesehen ist, und welche die Airbag-Abdeckung (11) bei einer Anlage an die Windschutzscheibe (2) nach oben hin abknickt und welche durch eine nach außen bzw. oben gerichtete Sicke (25) des Blechteils (19) und eine korrespondierende Schwächung (26) des angrenzenden Trägerteils (13) gebildet wird und das dünnwandige Blechteil (19) randseitig eine umlaufende rahmenförmige, nach innen gerichtete Versteifungssicke (28) aufweist und die quer verlaufende Sollknickstelle (24) etwa bis an beiden seitlichen Ränder der umlaufenden Versteifungssicke (28) heranragt.

2. Instrumententafel nach Anspruch 1, **dadurch gekennzeichnet, dass** ein radienförmiger Übergangsbereich des Blechteils (19) die quer verlaufende Schwenkachse (12) für die Airbag-Abdeckung (11) bildet.

3. Instrumententafel nach den Ansprüchen 1 oder 2, **dadurch gekennzeichnet, dass** sich das Blechteil (19) nahezu über den gesamten Flächenbereich der schwenkbaren Airbag-Abdeckung (11) erstreckt.

4. Instrumententafel nach den Ansprüchen 1, 2 oder 3, **dadurch gekennzeichnet, dass** das Blechteil (19) mit dem Trägerteil (13) der Airbag-Abdeckung (11) örtlich durch Nieten (20) verbunden ist.

## Claims

1. Dashboard (1) with a passenger airbag (4), wherein, when the airbag is triggered, an airbag covering (11), which runs on an upper side of the dashboard (1) adjacent to the windscreen (2), can be displaced upward about a transversely running pivot axis (12) in the direction of the windscreen (2) and opens up a passage opening (10) for a gas cushion (7) of the passenger airbag, wherein the airbag covering (11) is formed integrally with the dashboard, and the dashboard (1) and the airbag covering (11) are composed of an inner rigid support part (13), a foam plastic layer (14) located thereabove and a decorative layer (15) provided on the passenger compartment side, **characterized in that** the integral airbag covering (11) is connected on its inner side on the support part (13) to a thin-walled sheet-metal part (19) in which a predetermined buckling point (24) which runs continuously transversely is provided at a distance from the pivot axis (12), and which predetermined buckling point bends the airbag covering (11) upwards when it comes into contact with the windscreen (2), and which is formed by an outwardly or upwardly directed bead (25) of the sheet-metal part (19) and a corresponding weakened portion (26) of the adjacent support part (13), and the thin-walled sheet-metal part (19) has an encircling, frame-like, inwardly directed stiffening bead (28) on its edge, and the transversely running predetermined buckling point (24) extends approximately as far as the two lateral edges of the encircling stiffening bead (28).

2. Dashboard according to Claim 1, **characterized in that** a radius-like transition region of the sheet-metal part (19) forms the transversely running pivot axis (12) for the airbag covering (11).

3. Dashboard according to Claim 1 or 2, **characterized in that** the sheet-metal part (19) extends virtually over the entire surface region of the pivotable airbag covering (11).

4. Dashboard according to Claim 1, 2 or 3 **characterized in that** the sheet-metal part (19) is connected locally by means of rivets (20) to the support part (13) of the airbag covering (11).

## Revendications

1. Tableau de bord (1) avec un airbag pour passager (4), dans lequel, en cas de déclenchement d'un airbag, un couvercle d'airbag (11) placé sur un côté supérieur du tableau de bord (1) à proximité du pare-brise (2) est déplaçable vers le haut en direction du pare-brise (2) autour d'un axe de pivotement (12) orienté transversalement et libère une ouverture de passage (10) pour un sac de gaz (7) de l'airbag pour passager, dans lequel le couvercle d'airbag (11) est intégré dans le tableau de bord et le tableau de bord (1) et le couvercle d'airbag (11) sont composés d'une pièce de support rigide placée à l'intérieur (13), d'une couche de mousse synthétique (14) disposée au-dessus de celle-ci et d'une couche décorative (15) prévue sur le côté visible de l'habitacle, **caractérisé en ce que** le couvercle d'airbag intégral (11) est assemblé par son côté intérieur sur la pièce de support (13) à une pièce de tôle mince (19), dans laquelle il est prévu à distance de l'axe de pivotement (12) une zone de pliage préférentiel (24) orientée transversalement en continu, et qui plie le couvercle d'airbag (11) vers le haut lorsqu'il vient buter contre le pare-brise (2) et qui est formée par une moulure orientée vers l'extérieur ou vers le haut (25) de la pièce de tôle (19) et un affaiblissement correspondant (26) de la pièce de support adjacente (13), et la pièce de tôle mince (19) présente près du bord une moulure de renforcement périphérique (28) en forme de cadre, orientée vers l'intérieur, et la zone de pliage préférentiel orientée transversalement (24) s'étend jusqu'aux deux bords latéraux de la moulure de renforcement périphérique (28).

2. Tableau de bord selon la revendication 1, **caractérisé en ce qu'**une zone de transition en forme de rayon de la pièce de tôle (19) forme l'axe de pivotement orienté transversalement (12) pour le couvercle d'airbag (11).

3. Tableau de bord selon l'une quelconque des revendications 1 ou 2, **caractérisé en ce que** la pièce de tôle (19) s'étend pratiquement sur toute la zone de la surface du couvercle d'airbag pivotant (11).

4. Tableau de bord selon l'une quelconque des revendications 1, 2 ou 3, **caractérisé en ce que** la pièce de tôle (19) est assemblée localement par des rivets (20) à la pièce de support (13) du couvercle d'airbag (11).
